# EUROPÄISCHE PATENTSCHRIFT

(11) **EP 1 223 376 B1**
(45) Veröffentlichungstag und Bekanntmachung des Hinweises auf die Patenterteilung: **04.08.2004**
(21) Anmeldenummer: 02090017.1
(22) Anmeldetag: 16.01.2002
(51) Int. Cl.: F16L 47/00, F16L 3/04

(54) **Verrohrung zur Arbeitsmedienversorgung im Innenbereich von Schienenfahrzeugen**
Piping system for supplying fluid in indoor areas of railway vehicles
Système de tuyauterie pour alimenter en fluide l'interieur des véhicules ferroviaires

(30) Priorität: 16.01.2001 DE 10102667
(43) Veröffentlichungstag der Anmeldung: 17.07.2002
(73) Patentinhaber: Bombardier Transportation GmbH, 13627 Berlin (DE)
(72) Erfinder: Pönisch, Torsten, 16727 Bötzow (DE); Reuter, Torsten, 16761 Hennigsdorf (DE); Ziesak, Horst, 12439 Berlin (DE); Neumann, Gunther, 16727 Velten (DE); Rehbein, Horst, 14627 Elstal (DE); Mollenhauer, Volker, 12053 Berlin (DE); Eickhoff, Wolfgang, 10585 Berlin (DE)
(74) Vertreter: COHAUSZ & FLORACK

(56) Entgegenhaltungen:
- EP-A- 0 617 219
- EP-A- 0 890 778
- DE-A- 4 005 474
- DE-A- 4 227 796
- DE-A- 19 623 170
- DE-U- 20 015 593
- FR-A- 2 777 968
- GB-A- 159 518
- GB-A- 322 731
- GB-A- 944 539
- "Rohre aus Polyamid für Kraftfahrzeuge" DIN 73378, DT. INDUSTRIE NORM, GERMANY, Dezember 1990 (1990-12), XP002197232

## Beschreibung

Die Erfindung betrifft ein Schienenfahrzeug gemäß dem Oberbegriff des Anspruchs 1.

Im Innenbereich von Schienenfahrzeugen ist für die Versorgung von pneumatischen Türantrieben, Druckluft erforderlich, die von einer Druckluftversorgung zu den entsprechenden Verbrauchern transportiert werden muß, siehe beispielsweise die DE 200 15 593 U1.

Bisher wird diese Druckluftverrohrung im Innenbereich von Fahrzeugen jahrzehntelang durch Stahlrohre realisiert. Verbindungen mehrerer solcher Stahlrohre werden mit Hilfe von Schneidringverschraubungen hergestellt. Bei der Herstellung und dem Einbau einer derartigen Druckluftverrohrung werden die Stahlrohre zuerst zugeschnitten und entgratet, anschließend in Vormontage gebogen, gereinigt und an ihren Öffnungen verschlossen, um das Eindringen von Verunreinigungen zu verhindern. Danach werden die Stahlrohre in Hilfsgestellen zum Einbauort transportiert. Infolge der Größe und des Gewichtes der Stahlrohre erfordert die Bereitstellung der Stahlrohre einen hohen Platzbedarf. Die ungünstige Handhabbarkeit der Stahlrohre führt zu Nachteilen beim Transport und beim Einbau. Nach dem Transport zum Einbauort werden die Verschlüsse wieder entfernt und Schneidringverschraubungen in der Montage mit Hilfe von Automaten aufgebracht. Bei der anschließenden Montage der Druckluftverrohrung im Fahrzeug muß die Rohrund Haltermontage durch mindestens zwei Arbeitskräfte durchgeführt werden. Infolge herstellungsbedingter Toleranzen am Fahrzeug bzw. an den Stahlrohren ist dabei teilweise ein Nachbiegen in einer stationären Vorrichtung erforderlich. Erst danach können die Stahlrohre untereinander verschraubt und der Anschluß der Zuleitungen zu den Verbrauchern hergestellt werden. Nachteilig hierbei ist, daß zur Befestigung der Druckluftverrohrung Standard-Rohrschellen erforderlich sind, deren Verwendung zu eingeschränkten Befestigungs- und Verlegungsmöglichkeiten führen. Derartige Rohrschellen können nämlich nur an bestimmten Stellen am Rohbau des Schienenfahrzeugs befestigt werden. Weiterhin nachteilig ist das hohe Gewicht der Stahlrohre sowie eine fertigungs- und transportbedingte Rohrlänge. Letzteres führt dazu, daß zusätzliche Verschraubungen erforderlich sind, die auch bei der Wartung und Instandhaltung in zugänglichen Bereichen verlegt sein müssen. Dies erhöht zudem den konstruktiven Aufwand nicht nur der Druckluftverrohrung, sondern unter Umständen des gesamten Fahrzeugs.

Aus der DE 196 14 089 A1 ist es bekannt, Kunststoffrohre aus Polyamid zur Arbeitsmedienversorgung im Automobilbau einzusetzen. Hierbei werden Leitungen vom Hersteller einbaufertig an die jeweiligen Automobilhersteller geliefert. Die Leitungen werden räumlich vorgebogen, wobei Rohre durch eine äußere und/oder innere Wärmeeinwirkung auf das Rohr thermisch fixiert werden.

Aus der DE 40 05 474 A1 ist es bekannt, Sicherheitsleitungen aus thermoplastischen Kunststoffen als Betriebsstoff führende Leitungen und für Druckluftbremsanlagen in Kraftfahrzeugen einzusetzen.

Im Gegensatz zum Automobilbau bestehen bei Schienenfahrzeugen höhere Anforderungen an die Lebensdauer und Temperaturbeständigkeit von Leitungen zur Arbeitsmedienversorgung. Beispielsweise wird von den Betreibern von Schienenfahrzeugen verlangt, dass die Verrohrung eine Haltbarkeit von 20 Jahren oder mehr hat, ohne dass Teile der Leitung insbesondere Rohre ausgewechselt werden müssen. Der Temperaturbereich für den Einsatz der Verrohrung reicht bis zu -25 °C oder darunter. Bei Schienenfahrzeugen sind daher bisher nur Rohre aus Metall, insbesondere die oben beschriebenen Stahlrohre zur Arbeitsmedienversorgung eingesetzt worden.

Aufgabe der Erfindung ist es, die beschriebenen Nachteile des Standes der Technik zu beseitigen und ein Schienenfahrzeug mit einer verbesserten Verrohrung zur Druckluftversorgung eines pneumatischen Türantriebes des Schienenfahrzeuges vorzuschlagen, wobei die Verrohrung leicht montierbar sein soll und einen Ausgleich von Rohbautoleranzen sowie einen hohen Vorkonfektionierungsgrad ermöglichen soll.

Gelöst wird diese Aufgabe durch das in Anspruch 1 definierte Schienenfahrzeug.

Es wird ein Schienenfahrzeug, insbesondere für den Personennahverkehr, mit einem pneumatischen Türantrieb und einer Verrohrung zur Druckluftversorgung des pneumatischen Türantriebes vorgeschlagen, wobei die Verrohrung Rohre und Verbindungsmittel aufweist, und wobei erfindungsgemäß zumindest zwei Rohre der Verrohrung elastisch biegbar und durch das oder die Verbindungsmittel mit anderen Teilen der Verrohrung verbunden sind, und zumindest eines der elastischen Rohre aus Kunststoff besteht.

Bevorzugte und vorteilhafte Ausgestaltungen der erfindungsgemäßen Lösung sind in den Unteransprüchen angegeben.

Der Erfindung liegt der Gedanke zugrunde, dass eine Verrohrung auch dann für den Einsatz in Schienenfahrzeugen geeignet ist, wenn sie zumindest ein elastisch biegbares Rohr aufweist. Insbesondere ist dies auch dann der Fall, wenn die Verrohrung bei einem Betriebsdruck von mehreren bar in pneumatischen Systemen eingesetzt werden soll. Aufgrund der elastischen Verformbarkeit des oder der Rohre kann der Aufwand bei der Endmontage der Verrohrung herabgesetzt werden. Zum Beispiel ist es möglich, zwischen zwei oder an einem der elastisch verformbaren Rohren angeordnete Teile der Verrohrung je nach Montagesituation an unterschiedlichen Stellen im Innenbereich des Schienenfahrzeugs zu befestigen. Der günstigste Befestigungspunkt kann daher erst bei der Montage ausgewählt werden. Eine aufwändige, präzise Vorbereitung von Befestigungen entfällt. Weiterhin kann dieselbe vormontierte Verrohrung für unterschiedliche Typen von Schienenfahrzeugen und/oder bei unterschiedlichen Ausstattungsvarianten verwendet werden.

Ein weiterer Gedanke der vorliegenden Erfindung besteht darin, dass, anders als in der DE 196 14 089 beschrieben, eine Verformung von Rohren nicht notwendigerweise thermisch fixiert werden muss.

Insbesondere kann das elastische Rohr durch eine Rohrschelle an einem tragenden Teil des Schienenfahrzeuges befestigt werden. Vorzugsweise ist dabei ein Öffnungsquerschnitt der Rohraufnahme der Rohrschelle im fertig montierten Zustand kleiner als der Außenquerschnitt des Rohres im nicht montierten Zustand. Dadurch wird das Rohr sicher fixiert und kann das elastische Rohr in seinem weiteren Verlauf gebogen und/oder gedehnt werden. Die Fixierung durch die Rohrschelle erleichtert die elastische Verformung, insbesondere das gleichmäßige Biegen des Rohres. Bevorzugt wird, das elastisch biegbare Rohr bei der Montage der Verrohrung am Schienenfahrzeug elastisch zu verformen und die Verrohrung an dem Teil des Schienenfahrzeuges so zu befestigen, dass eine elastische Verformungsspannung des Rohres beibehalten wird.

Die Verrohrung beinhaltet Rohre, Verbindungsmittel und Befestigungsmittel. Die Verbindungsmittel dienen zum Verbinden mehrerer Rohre. Die Befestigungsmittel dienen zum Befestigen der Rohre am Fahrzeug. Die Verrohrung zeichnet sich dadurch aus, daß mindestens der überwiegende Teil der Rohre, insbesondere alle Rohre aus halbflexiblem Kunststoff besteht. Halbflexibel bedeutet in diesem Fall, daß die Rohre zum einen derart elastisch sind, daß sie von einer Kraft, die ein Mensch ohne größere zusätzliche Hilfsmittel aufwenden kann, biegsam sind und zum anderen, daß die Rohre eine derartige Steifigkeit aufweisen, daß sie sich nicht unter ihrem Eigengewicht im eingebauten Zustand wesentlich verformen können. Beispielsweise werden Polyamidrohre und/oder Polyurethanrohre eingesetzt (z. B. der Parker Hannifin Corporation). Die Kunststoffrohre weisen vorzugsweise einen Innendurchmesser zwischen 6 mm und 13 mm und einen Außendurchmesser zwischen 8 mm und 16 mm auf.
Weiterhin weisen die Rohre eine Wandungsstärke vorzugsweise zwischen 1 mm und 1,5 mm auf. Insbesondere bei geringen Wandungsstärken muß aufgrund der erhöhten Abknickgefahr sorgfältig auf die Verlegung geachtet werden.

Die Vorteile der Erfindung bestehen darin, daß eine erheblich leichtere Montage ermöglicht wird. Rohbautoleranzen können sehr einfach und ohne Schwierigkeiten ausgeglichen werden. Wartungs- und Instandhaltungsbedingungen werden wesentlich vereinfacht. Insbesondere durch die Einsparung von Verschraubungen und Verbindungselementen sowie Biegemaschinen und sonstigen derartigen Vorrichtungen reduziert sich der ökonomische Aufwand. Der Transportaufwand der vorkonfektionierbaren Teile wird wesentlich verringert.

Vorzugsweise sind mindestens zwei Rohre der Verrohrung mittels einer oder mehrerer Verschraubungen, insbesondere mittels einer oder mehrerer Schneidringverschraubungen mit anderen Teilen der Verrohrung verbunden.

Die Erfindung wird anhand eines Ausführungsbeispiels nachfolgend näher erläutert.
Die Verrohrung erfolgt in einem Schienenfahrzeug für den Personennahverkehr, wobei die pneumatischen Türantriebe mit Druckluft versorgt werden müssen. Alle Rohre der Druckluftverrohrung bestehen aus halbflexiblem Material, in diesem Ausführungsbeispiel aus Polyamid (z. B. polyflex® presto der Parker Hannifin Corporation). Die Dimensionierung der Rohre erfolgt in diesem Ausführungsbeispiel insbesondere ausgehend von den Durchflußmengen. Die Polyamidrohre (z. B. nach DIN 73378) weisen einen Außendurchmesser von etwa 16 mm und einen Innendurchmesser von etwa 13 mm auf. Der Betriebsdruck zum Betätigen der pneumatischen Türantriebe liegt etwa zwischen 3,5 bar und 5 bar.
Die Herstellung der Druckluftverrohrung erfolgt dabei wie folgt. Bei der Vorkonfektionierung, die an beliebiger Stelle erfolgen kann, werden zuerst die Polyamidrohre in jeder konstruktiv erforderlichen Länge zugeschnitten. Dies kann, infolge des verwendeten Materials, mit einfachen Werkzeugen durchgeführt werden. Anschließend werden die erforderlichen Verschraubungen und Verbindungen sowie Verzweigungen, z. B. T- oder Y-Stücke an die Polyamidrohre angebracht. Soweit vorhanden, werden Teilabschnitte und Zuleitungen miteinander verbunden. Die verbliebenen Öffnungen werden verschlossen. Die Vormontage ist nunmehr abgeschlossen. Der anschließende Transport zum Einbauort erfordert einen geringen Aufwand, da die vorkonfektionierten Teile ein geringes Gewicht und einen geringen Platzbedarf aufweisen. Längere Polyamidrohre lassen sich infolge der Flexibilität beispielsweise leicht aufrollen. Bei der Montage der vorkonfektionierten Teile im Fahrzeugrohbau erfolgt eine einfache und montagefreundliche Verlegung der Polyamidrohre. Toleranzen aus z. B. Rohbauabweichungen können durch die Flexibilität des Materials leicht und ohne große Aufwendungen und/oder Vorrichtungen direkt am Einbauort bzw. bei der Montage am Fahrzeugrohbau ausgeglichen werden. Die Verbindung mehrerer Polyamidrohre erfolgt beispielsweise mittels Schneidringverschraubungen. Auch andere Verbindungsmittel, z. B. Metrulok-Steckverbinder und/oder Prestolok-Steckverbinder sind möglich. Die Polyamidrohre werden mittels Kunststoffklemmen, insbesondere rastbaren Kunststofformklemmen beliebig am Fahrzeugrohbau befestigt. An Stellen mit besonderer Lastbeanspruchung erfolgt die Befestigung durch Standard-Rohrschellen.

## Patentansprüche

1. Schienenfahrzeug, insbesondere für den Personennahverkehr, mit einem pneumatischen Türantrieb und einer Verrohrung zur Druckluftversorgung des pneumatischen Türantriebes, wobei die Verrohrung Rohre und Verbindungsmittel aufweist,
**dadurch gekennzeichnet, dass** zumindest zwei Rohre der Verrohrung elastisch biegbar und durch das oder die Verbindungsmittel mit anderen Teilen der Verrohrung verbunden sind, wobei zumindest eines der elastischen Rohre aus Kunststoff besteht.

2. Schienenfahrzeug nach Anspruch 1,
**dadurch gekennzeichnet, dass** die elastisch biegbaren Rohre der Verrohrung, die durch das oder die Verbindungsmittel mit anderen Teilen der Verrohrung verbunden sind, auch elastisch dehnbar sind.

3. Schienenfahrzeug nach Anspruch 1 oder 2,
**dadurch gekennzeichnet, dass** zumindest eines der elastischen, aus Kunststoff bestehenden Rohre aus Polyamid oder Polyurethan besteht.

4. Schienenfahrzeug nach einem der Ansprüche 1 bis 3,
**dadurch gekennzeichnet, dass** zumindest eines der elastischen Rohre einen Innendurchmesser zwischen 6 mm und 13 mm aufweist.

5. Schienenfahrzeug nach einem der Ansprüche 1 bis 4,
**dadurch gekennzeichnet, dass** zumindest eines der elastischen Rohre einen Außendurchmesser zwischen 8 mm und 16 mm aufweist.

6. Schienenfahrzeug nach einem der Ansprüche 1 bis 5,
**dadurch gekennzeichnet, dass** zumindest eines der elastischen Rohre eine Wandungsstärke zwischen 1 mm und 1,5 mm, vorzugsweise 1,5 mm aufweist.

7. Schienenfahrzeug nach einem der Ansprüche 1 bis 6,
**dadurch gekennzeichnet, dass** die Verrohrung an einem oder mehreren tragenden Teilen des Schienenfahrzeuges, insbesondere an einem Wagenkasten, befestigt ist.

8. Schienenfahrzeug nach Anspruch 7,
**dadurch gekennzeichnet, dass** das elastische Rohr durch eine Rohrschelle an dem tragenden Teil befestigt ist, wobei ein Öffnungsquerschnitt der Rohraufnahme der Rohrschelle im fertig montierten Zustand kleiner ist als der Außenquerschnitt des Rohres im nicht montierten Zustand.

9. Schienenfahrzeug nach Anspruch 7 oder 8,
**dadurch gekennzeichnet, dass** das elastische Rohr nach der Montage der Verrohrung am Schienenfahrzeug elastisch verformt ist, wobei die Verrohrung so an dem tragenden Teil befestigt ist, dass eine elastische Verformungsspannung des Rohres beibehalten wird.

## Claims

1. A rail vehicle, particularly for local public transport, with a pneumatic door drive and a pipe system for supplying the pneumatic door drive with compressed air, wherein the pipe system comprises pipes and connecting means,
**characterized in that**
at least two pipes of the pipe system can be elastically bent and are connected to other parts of the pipe system by the connecting means, wherein at least one of the elastic pipes consists of plastic.

2. The rail vehicle according to Claim 1,
**characterized in that**
the elastically bendable pipes of the pipe system which are connected to other parts of the pipe system by the connecting means are also elastically extendible.

3. The rail vehicle according to Claim 1 or 2,
**characterized in that**
at least one of the elastic plastic pipes consists of polyamide or polyurethane.

4. The rail vehicle according to one of Claims 1-3,
**characterized in that**
at least one of the elastic pipes has an inside diameter between 6 mm and 13 mm.

5. The rail vehicle according to one of Claims 1-4,
**characterized in that**
at least one of the elastic pipes has an outside diameter between 8 mm and 16 mm.

6. The rail vehicle according to one of Claims 1-5,
**characterized in that**
at least one of the elastic pipes has a wall thickness between 1 mm and 1.5 mm, preferably 1.5 mm.

7. The rail vehicle according to one of Claims 1-6,
**characterized in that**
the pipe system is mounted on one or more support structures of the rail vehicle, particularly on a vehicle box body.

8. The rail vehicle according to Claim 7,
**characterized in that**
the elastic pipe is mounted on the support structure by means of a pipe clamp, wherein the clear cross section of the pipe receptacle of the pipe clamp is smaller in the mounted state than the outside cross section of the pipe in the non-mounted state.

9. The rail vehicle according to Claim 7 or 8,
**characterized in that**
the elastic pipe is elastically deformed after the pipe system is mounted on the rail vehicle, wherein the pipe system is mounted on the support structure in such a way that an elastic deformation stress of the pipe is preserved.

## Revendications

1. Véhicule ferroviaire, notamment pour le transport local de personnes, comportant une commande de porte pneumatique et une tuyauterie pour l'alimentation en air comprimé de la commande de porte automatique, la tuyauterie présentant des tuyaux et des moyens de liaison,
**caractérisé en ce**
**qu'**au moins deux tuyaux de la tuyauterie sont élastiquement flexibles et reliés par le ou les moyens de liaison à d'autres pièces de la tuyauterie, au moins un des tuyaux élastiques étant composé de matière plastique.

2. Véhicule ferroviaire selon la revendication 1,
**caractérisé en ce que**
les tuyaux élastiquement flexibles de la tuyauterie qui sont reliés par le ou les moyens de liaison à d'autres pièces de la tuyauterie sont aussi extensibles élastiquement.

3. Véhicule ferroviaire selon la revendication 1 ou 2,
**caractérisé en ce**
**qu'**au moins un des tuyaux élastiques composés de matière plastique est en polyamide ou en polyuréthane.

4. Véhicule ferroviaire selon l'une quelconque des revendications 1 à 3,
**caractérisé en ce**
**qu'**au moins un des tuyaux élastiques présente un diamètre intérieur allant de 6 mm à 13 mm.

5. Véhicule ferroviaire selon l'une quelconque des revendications 1 à 4,
**caractérisé en ce**
**qu'**au moins un des tuyaux élastiques présente un diamètre extérieur allant de 8 à 16 mm.

6. Véhicule ferroviaire selon l'une quelconque des revendications 1 à 5,
**caractérisé en ce**
**qu'**au moins un des tuyaux élastiques présente une épaisseur de paroi allant de 1 à 1,5 mm, de préférence de 1,5 mm.

7. Véhicule ferroviaire selon l'une quelconque des revendications 1 à 6,
**caractérisé en ce que**
la tuyauterie est fixée à une ou plusieurs pièces porteuses du véhicule ferroviaire, notamment à un caisson de véhicule.

8. Véhicule ferroviaire selon la revendication 7,
**caractérisé en ce que**
le tuyau élastique est fixé par un collier de tuyau à la pièce porteuse, une section transversale d'ouverture du support de tuyau du collier de tuyau étant, à l'état monté fini, plus petite que la section transversale extérieure du tuyau à l'état non monté.

9. Véhicule ferroviaire selon la revendication 7 ou 8,
**caractérisé en ce que**
le tuyau élastique est déformé élastiquement après le montage de la tuyauterie sur le véhicule ferroviaire, la tuyauterie étant fixée à la pièce porteuse de manière à ce qu'une tension de déformation élastique du tuyau soit maintenue.
